# EUROPEAN PATENT APPLICATION

(11) **EP 4 780 018 A1**
(43) Date of publication of application: **22.07.2026**
(21) Application number: 25152565.5
(22) Date of filing: 17.01.2025
(51) Int. Cl.: H04R 3/00

(54) **A MICROPHONE HUB AND METHOD OF OPERATING A MICROPHONE HUB**

(71) Applicant: Harman Becker Automotive Systems, Inc., Novi, MI 48377 (US)
(72) Inventor: CHEN, Zhijun, Kanagawa, 215-0023 (JP); DOBOS, Viktor, 6000 Kecskemét (HU)
(74) Representative: Rummler, Felix

(57) **Abstract**

A microphone hub and a method of operating one or more microphone hubs, The microphone hub including an input operable to receive one or more analog audio signals from one or more microphones, an audio network interface (ANIF), at least one analogue to digital converter (ADC) coupled to the input and to the ANIF, and a power system operable to provide power to the microphone hub. The ADC is operable to convert each of the one or more analog audio signals to one or more digital audio signals. The ADC is further operable to send the one or more digital audio signals to the ANIF.

## Description

The present invention relates to a microphone hub, a system, a vehicle, and a method of operating one or more microphone hubs. In particular, the invention relates to microphone hubs and a method of operating the microphone hubs that provide a flexible design, allowing upgradeability towards future input/output interfaces.

### BACKGROUND OF THE INVENTION

Microphone adoption rate is within electronic devices is increasing due, for example, to more demanding smart devices. This is particularly relevant in vehicles, such as autonomous vehicles, where microphones are essential for sensing audio signals to feed back to an electronic control unit (ECU) of the vehicle for the purpose of providing effective autonomous driving features. An increase in microphone usage is also found in smart home and in-vehicle environments, where the demand for voice commands by users of a smart home or vehicle is increasing at exponential rates.

Current systems for coupling a large number of analog microphones to one or more computers (for example, current in-vehicle infotainment (IVI) systems) were not designed to receive inputs from multiple different microphones. For example, current systems within a vehicle, a vehicle's cabin, a smart home, etc are typically designed for that specific application. Such bespoke systems are costly and are difficult to upgrade for future iterations (e.g., extension needs where additional microphones, and/or newer microphones may be required). Current systems also have limited bandwidth which limits the number of microphones (and, accordingly, the number of input audio signals and, thus, features) that a system can handle.

Accordingly, there is a need in the industry to increase the number of microphones that an in-vehicle infotainment and/or smart-home appliance can handle. There is also a need in the industry to provide a flexible design, that allows upgradeability towards future input/output interfaces.

### SUMMARY

To achieve the above objectives, the invention sets out a microphone hub, a system, a vehicle and a method of operating one or more microphone hubs as in the claims below.

In a preferred embodiment, a microphone hub is provided. The microphone hub includes an input operable to receive one or more analog audio signals from one or more microphones, an audio network interface (ANIF), at least one analogue to digital converter (ADC) coupled to the input and to the ANIF, and a power system operable to provide power to the microphone hub. The ADC is operable to convert each of the one or more analog audio signals to one or more digital audio signals. The ADC is further operable to send the one or more digital audio signals to the ANIF.

Advantageously, a flexible and dedicated microphone hub is provided that can receive an audio input signal from as little as one microphone up to a plurality of microphones. By providing a microphone hub with all the essential features to couple to one or more microphones, to convert the analog audio signal to a digital audio signal, and to send the digital audio signal to the device's own ANIF before (for example) sending the digital audio signal to an external computer (such as an ECU of a vehicle), a simple device is provided that can be flexibly applied in a plurality of different environments (for example, environments were different numbers of microphones are required). This provides a large cost saving to original equipment manufacturers (OEMs) that currently create bespoke wiring and electrical arrangements depending on the specific requirements of a vehicle. The above-mentioned microphone hub can be used in any vehicle (or smart home arrangement) that has a computer (such as an ECU) and one or more microphones and can operate as a simple "plug and play" type device.

In an embodiment, the microphone hub includes memory coupled to the ANIF.

In an embodiment, the memory is operable to store metadata of the components within the microphone hub, metadata of the one or more microphones coupled to the microphone hub, diagnostic data of one or more components within the microphone hub, or any combination of the above.

In an embodiment, the memory is electrically erasable programmable read-only memory (EEPROM).

Advantageously, the microphone hub comprises a cheap memory device that stores essential information that can be read by an external computer when in use. The microphone hub does not require a processing device or computer as all the processing is done from an external computer to which the microphone is coupled during use. The memory may be an EEPROM which is a small, inexpensive memory device providing an affordability and simplicity to the microphone hub. The metadata may include Parts Number, Serial Number, support numbers for the one or more microphones, diagnostic information related to the microphone hub (for example, a microphone line being open, shorted, connected, etc.). Advantageously, during use, the computer to which the microphone is coupled can (for example, through a master ANIF within that computer) access essential information to effectively run the equipment within the microphone hub (for example, the one or more ADCs) by accessing the metadata stored on the memory of the microphone hub. This significantly reduces time spent by an external computer/ECU in an RFX (request for anything) phase, thereby improving efficiency.

In an embodiment, the microphone hub includes a connector coupled to the power system, the connector operable to receive power from a power supply and to provide the power to the power system.

Advantageously, the microphone hub is a passive device that does not require a large amount of power and can be powered by a plurality of different types of systems. For example, the microphone hub can be powered from a local power source (i.e., a direct source, such as a battery of a vehicle) or from a phantom power source, which may include power provided by the computer of the vehicle or smart home.

In an embodiment, the microphone hub includes a noise filter coupled between the connector and the power system.

In an embodiment, the noise filter includes a local power filter, a phantom power filter, or a local power filter and a phantom power filter. The local power filter is operable to filter out power line noise if the power supply is a dedicated power supply for the microphone hub. The phantom power filter is operable to filter out power line noise if the power supply is from a second ANIF, separate from the microphone hub.

Advantageously, the microphone hub can effectively filter out different types of power line noise, depending on the type of power supply coupled to the microphone hub. This provides a more versatile microphone hub that can be applied to multiple different types of applications (for example, applications where a local power supply is available, where a local power supply is solely available, where a phantom power supply is available, or where solely a phantom power supply is available) thus increasing the usability of the microphone hub for a variety of OEMs.

In an embodiment, the microphone hub includes a switch operable to switch the microphone hub on or off.

Advantageously, the microphone hub can be switched on and off for power savings. The switch can be a manually actuated switch or it can be operable to receive a signal from an external computer to actuate and, thus, switch the microphone hub on or off.

In a preferred embodiment, a system is provided. The system includes a plurality of microphone hubs, each of the plurality of microphone hubs corresponding to the microphone hub as defined above. The ANIF of each of the plurality of microphone hubs correspond to a slave ANIF and each of the plurality of microphone hubs are coupled to a computer via a master ANIF of the computer.

Advantageously, multiple microphone hubs can be coupled together to accommodate any number of microphones. A single microphone hub may be effective with up to eight microphone inputs (each coupled to one or more ADCs within the microphone hub). By providing a system with multiple microphone hubs, a large number (e.g. more than 8) of microphones can simply be connected to a single computer without large re-wiring requirements. Similarly, an arrangement can easily be upgrade to include a larger number of microphones by simply plugging in one or more additional microphone hubs.

In an embodiment, each of the plurality of microphone hubs is coupled to the master ANIF in a daisy chain connection. Advantageously, the plurality of microphone hubs are compatible with A2B connections (for example, including A2B 1.0, 2.0 and future iterations of A2B) operable to support multiple channel audio with no jitter and extremely low, fixed latency.

In an embodiment, each of the plurality of microphone hubs is coupled to the master ANIF in a star connection. Advantageously, the plurality of microphone hubs are compatible with Audio Video Bridging (AVB) connections, and/or Ethernet connections.

In an embodiment, each of the plurality of microphone hubs is coupled to the master ANIF in a ring type connection. Advantageously, the plurality of microphone hubs are compatible with Multichannel Audio Digital Interface (MADI), eMOST, and/or INICnet type connections.

In a preferred embodiment, a vehicle is provided. The vehicle includes a plurality of microphones, a computer comprising a processor, a master ANIF coupled to the processor, and the microphone hub as described above or the system as described above.

Advantageously, a vehicle is provided with flexible and dedicated microphone hub is provided that can receive an audio input signal from as little as one microphone up to a plurality of microphones. By providing a microphone hub with all the essential features to couple to one or more microphones, to convert the analog audio signal to a digital audio signal, and to send the digital audio signal to the device's own ANIF before (for example) sending the digital audio signal to an external computer (such as an ECU of a vehicle), a simple device is provided that can be flexibly applied in a plurality of different environments (for example, environments were different numbers of microphones are required). This provides a large cost saving to original equipment manufacturers (OEMs) that currently create bespoke wiring and electrical arrangements depending on the specific requirements of a vehicle. The above-mentioned microphone hub can be used in any vehicle (or smart home arrangement) that has a computer (such as an ECU) and one or more microphones and can operate as a simple "plug and play" type device.

In a preferred embodiment, a method of operating one or more microphone hubs as defined above is provided. The microphone hub is coupled to a master ANIF of a computer that is separate to the microphone hub, and the ANIF of the microphone hub is a slave ANIF. The method includes detecting, at the connector of the microphone hub, a current. The method includes passing the current through the filter. The method includes activating the switch coupled to the connector and to the power system of the microphone hub. The method includes receiving configuration data from the master ANIF. The method includes configuring the at least one ADC based on the configuration data. The method includes receiving one or more analog audio signals from one or more microphones coupled to the input. The method includes converting, by the ADC, each of the one or more analog audio signals to one or more digital audio signals. The method includes transferring the one or more digital audio signals from the slave ANIF to the master ANIF.

Advantageously, a microphone hub is provided that can receive an audio input signal from as little as one microphone up to a plurality of microphones. By providing a microphone hub with all the essential features to couple to one or more microphones, to convert the analog audio signal to a digital audio signal, and to send the digital audio signal to the device's own ANIF before (for example) sending the digital audio signal to an external computer (such as an ECU of a vehicle), a simple device is provided that can be flexibly applied in a plurality of different environments (for example, environments were different numbers of microphones are required). This provides a large cost saving to original equipment manufacturers (OEMs) that currently create bespoke wiring and electrical arrangements depending on the specific requirements of a vehicle. The above-mentioned microphone hub can be used in any vehicle (or smart home arrangement) that has a computer (such as an ECU) and one or more microphones and can operate as a simple "plug and play" type device. During use, the computer to which the microphone is coupled can (for example, through a master ANIF within that computer) may access essential information of the microphone hub (for example, stored on a memory of the microphone hub) to effectively run the equipment within the microphone hub (for example, the one or more ADCs) by accessing the metadata stored on the memory of the microphone hub. This significantly reduces time spent by an external computer/ECU in an RFX (request for anything) phase, thereby improving efficiency.

In an embodiment, the one or more microphone hubs comprise a plurality of microphone hubs, each of the plurality of microphone hubs corresponding to the microphone hub of claims as described above. The ANIF of each of the plurality of microphone hubs correspond to a slave ANIF and each of the plurality of microphone hubs are coupled to the computer via the master ANIF of the computer. Each of the plurality of microphone hubs is coupled to the master ANIF in a daisy chain connection, a star connection, or a ring type connection.

Advantageously, multiple microphone hubs can be coupled together to accommodate any number of microphones. A single microphone hub may be effective with up to eight microphone inputs (each coupled to one or more ADCs within the microphone hub). By providing a system with multiple microphone hubs, a large number (e.g. more than 8) of microphones can simply be connected to a single computer without large re-wiring requirements. Similarly, an arrangement can easily be upgrade to include a larger number of microphones by simply plugging in one or more additional microphone hubs. The plurality of microphone hubs are compatible with a plurality of connection types. For example, in a daisy connection, the plurality of microphone hubs are compatible with A2B connections (for example, including A2B 1.0, 2.0 and future iterations of A2B) operable to support multiple channel audio with no jitter and extremely low, fixed latency. In a star connection, the plurality of microphone hubs are compatible with Audio Video Bridging (AVB) connections, and/or Ethernet connections. In a ring type connection, the plurality of microphone hubs are compatible with Multichannel Audio Digital Interface (MADI), eMOST, and/or INICnet type connections.

### BRIEF DESCRIPTION OF THE DRAWINGS

The features, objects, and advantages of the present disclosure will become more apparent from the detailed description set forth below when taken in conjunction with the drawings in which like reference numerals refer to similar elements.
Figure 1 shows a microphone hub according to the invention;
Figure 2 shows an example microphone hub including electrical and signal connections between components of the microphone hub according to the invention;
Figures 3a and 3b show example configurations of one or more microphone hubs of figures 1 or 2 in communication with a computer, according to the invention;
Figures 4a, 4b and 4c depict different power supplies for the microphone hub of figures 1 or 2, according to the invention;
Figure 5 depicts a vehicle including the microphone hub of figures 1 or 2, the computer of figures 3 or 4, and a plurality of microphones, according to the invention; and
Figure 6 depicts a flow chart of a method of operating one or more microphone hubs of figures 1 or 2, according to the invention.

### DETAILED DESCRIPTION

The present invention relates to a microphone hub that includes a plurality of input ports, operable to be coupled to one or more microphones, one or more connections operable to be coupled to a computer (such as an ECU of a vehicle, or a computer of a smart home), and a set of electrical components (for example, one or more ADCs, an ANIF, a power supply, memory, etc.). The microphone hub acts as a passive device (i.e. a slave device that is controlled primarily by a computer, such as the ECU of a vehicle or the computer of a smart home) and aims to replace direct and/or permanent electrical couplings of one or more microphones to the computer with a more dynamic "plug and play" hub. Accordingly, the microphone hub provides increased flexibility for replacement of the hub, addition of one or more microphones, addition of one or more hubs etc. The microphone hub may include a plurality of universal electrical and/or signal transfer connections (for example, universal connectors to electrically couple one or more microphones to the microphone hub, and/or universal connectors to couple a computer to the microphone hub). Accordingly, the microphone hub provides a universal device that can be utilised in a plurality of different types of vehicles and/or smart homes, irrespective of the specific requirements of the vehicle and/or smart home. The invention also has relates to a plurality of microphone hubs coupled to each other to facilitate an arrangement with a large number of analog microphones.

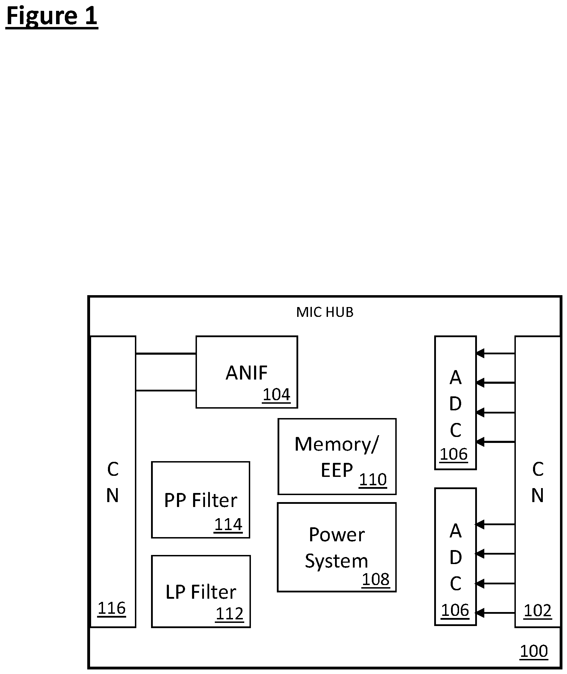

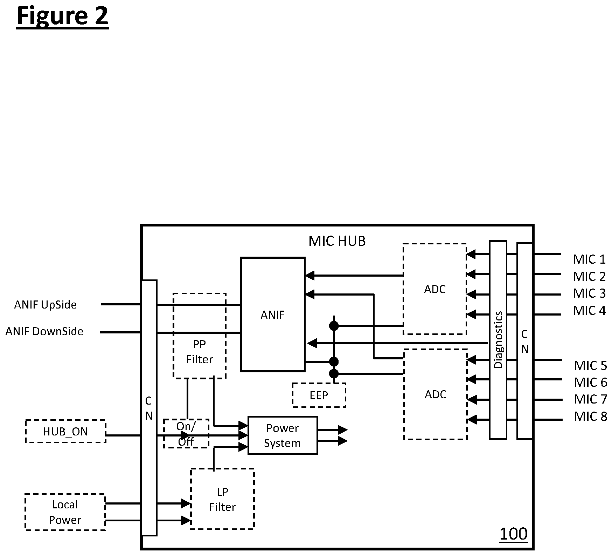

Figure 1 shows a top-level diagram of a microphone hub 100. Figure 2 shows a more detailed diagram of the microphone hub 100 including electrical and signal connections going into and out of the microphone hub 100 and within the microphone hub 100. The microphone hub 100 includes an input 102 operable to receive one or more analog audio signals from one or more microphones. The input may include a plurality of connectors (for example a male-type or female-type connector) operable to receive a corresponding connector (for example, a female-type or a male-type connector) from the one or more microphones. The input 102 may include eight connectors such that up to eight analog microphones can be coupled to the microphone hub 100. In an embodiment, the input 102 may include fewer than eight connectors or more than eight connectors. Each connector may be any suitable connector operable to receive a cable coupled to an analog microphone. For example, each connector may be a Molex type 34897-8160 Black connector. However, any suitable supported connector may be used, depending on the requirements and/or demands of the OEM.

The microphone hub 100 includes one or more analog to digital converters (ADC) 106 and an audio network interface (ANIF) 104. The one or more ADC 106 are coupled (for example, with a wired connection) to the input 102 and to the ANIF 104. Figures 1 and 2 depict two ADC 106 in the microphone hub 100. However, the microphone hub may include only one ADC 106 or any number of ADC 106. Each ADC 106 may each include one or more inputs. Each of the inputs of the ADC 106 are operable to receive a separate analog audio signal from the one or more microphones. In other words, the microphone hub 100 may include a plurality of input channels (for example, eight input channels) in the input 102, each input channel dedicated to one microphone connection. Each ADC 106 may be operable to receive one or more (for example, up to four) separate input channels). Accordingly, each ADC 106 may be operable to convert the input analog audio signal for each channel that is input into the ADC 106 into a digital audio signal. In a preferred embodiment, the microphone hub 100 includes two ADCs 106, a first ADC having four inputs for a first four analog audio signal inputs from a first four microphones, and a second ADC having four inputs for a fifth to eight analog audio signal inputs from fifth to eight microphones. Each ADC 106 is operable to send each of the one or more digital audio signals to the ANIF 104 of the microphone hub 100.

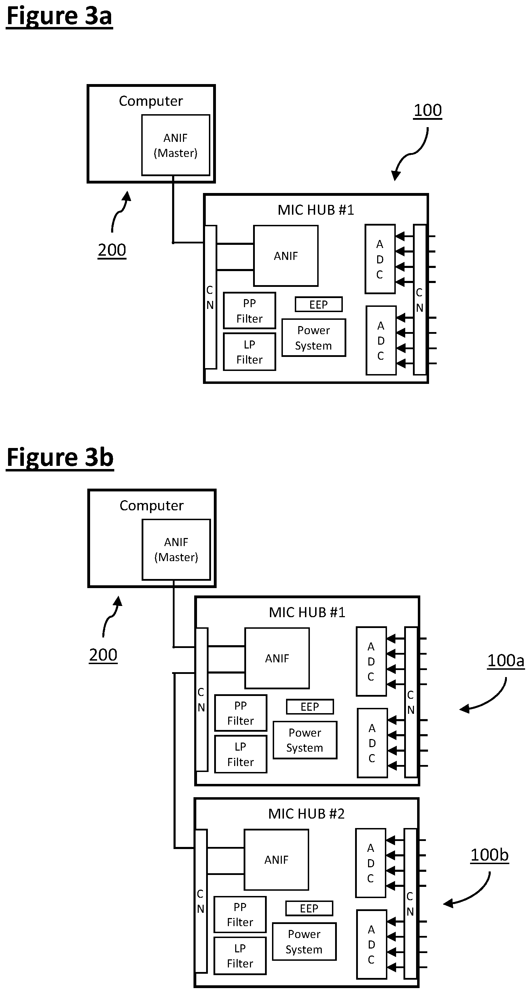

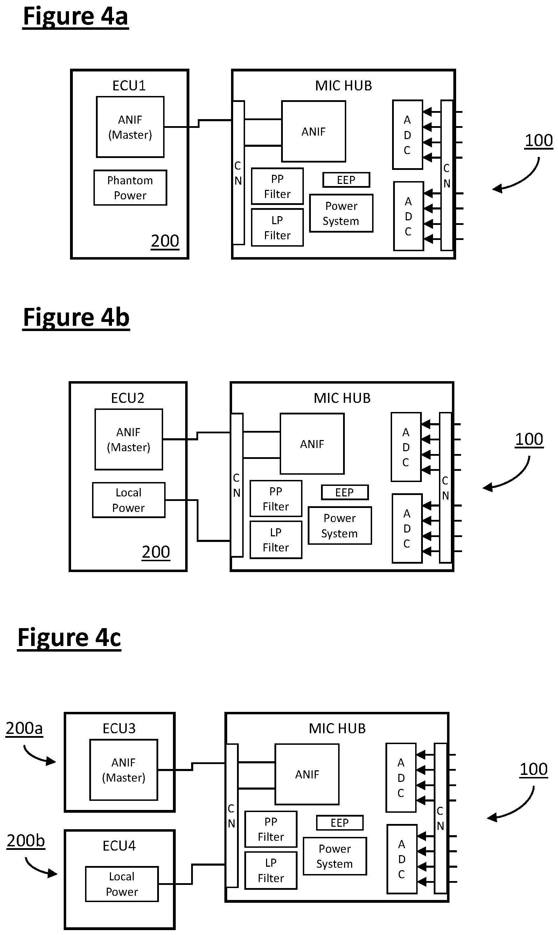

The ANIF 104 may include an ANIF UpSide connection operable to send the one or more digital audio signals, and/or metadata (for example, stored on the memory 110) out of the microphone hub 100 (for example, to a master ANIF of a separate computer as described in more detail below), and an ANIF DownSide connection operable to receive one or more instructions from an external component (for example, from a master ANIF of an external computer as described below in more detail). The ANIF UpSide connection and the ANIF DownSide connection are coupled (for example, with a wired connection) to a connector 116 of the microphone hub 100. The connector 116 may be a universal connector including a plurality of suitable input/output connections operable to coupled the microphone hub 100 to an external computer (as described in figures 3 and 4 below), to one or more additional microphone hubs (as described in figure 3 below), to one or more power supplies (as described in figure 4 below), or any combination of the above.

The microphone hub 100 includes a power system 108 operable to provide power to the microphone hub. The power system 108 may include a transformer, an analog to digital converter (ADC), and/or a digital to analog converter (DAC). Accordingly, the power system 108 is operable to receive a current from an outside source (such as a local power source (LP), a phantom power source (PP), a combination of the two as described in more detail in figures 4a, 4b and 4c) and is operable to direct the power to each of the components described above and below within the microphone hub 100. For example, the power supply 108 may provide power for the one or more ADCs 106, may provide power to the one or more microphones coupled to the microphone hub 100, may provide power to a chip within the ANIF 104, and may provide power to a memory 110 of the microphone hub 100.

Advantageously, a flexible and dedicated microphone hub is provided that can receive an audio input signal from as little as one microphone up to a plurality of microphones. By providing a microphone hub with all the essential features to couple to one or more microphones, to convert the analog audio signal to a digital audio signal, and to send the digital audio signal to the device's own ANIF before (for example) sending the digital audio signal to an external computer (such as an ECU of a vehicle), a simple device is provided that can be flexibly applied in a plurality of different environments (for example, environments were different numbers of microphones are required). This provides a large cost saving to original equipment manufacturers (OEMs) that currently create bespoke wiring and electrical arrangements depending on the specific requirements of a vehicle. The above-mentioned microphone hub can be used in any vehicle (or smart home arrangement) that has a computer (such as an ECU) and one or more microphones and can operate as a simple "plug and play" type device. OEM specific designs for coupling microphones to an ECU/computer are not required with the present invention. Instead, when designing a domain controller, or next generation in-vehicle infotainment (IVI) systems, the microphone hub 100 can act as a universal microphone hub 100 for a vast amount of different configurations. Accordingly, production cost is reduced for OEMS because a single product can be used for multiple applications, replacing multiple products. Similarly, research costs and efforts into new products is reduced by providing a futureproof microphone hub 100 that provides an OEM with a flexible selection of Audio Network interface.

In an embodiment, the connector 116 may be coupled to the power system 108, the connector including one or more suitable power inputs and operable to receive power from a power supply, and operable to provide the power to the power system 108. Advantageously, the microphone hub is a passive device that does not require a large amount of power and can be powered by a plurality of different types of systems. For example, the microphone hub can be powered from a local power source (i.e., a direct source, such as a battery of a vehicle) or from a phantom power source, which may include power provided by the computer of the vehicle or smart home.

In an embodiment, the microphone hub 100 includes memory 110 coupled (for example with a wired connection) to the ANIF 104. The memory may be operable to store metadata of the components within the microphone hub (for example, one or more parts numbers for each of the components within the microphone hub 100, one or more serial numbers for each of the components within the microphone hub 100, etc.), metadata of the one or more microphones coupled to the microphone hub (for example, whether a connected microphone is supported by the microphone hub 100, whether a connected microphone is functioning or malfunctioning (for example, due to a short circuit), diagnostic data of one or more components within the microphone hub, or any combination of the above. The memory 110 is electrically erasable programmable read-only memory (EEPROM or EEP).

Advantageously, the microphone hub comprises a cheap memory device that stores essential information that can be read by an external computer when in use. The microphone hub does not require a processing device or computer as all the processing is done from an external computer to which the microphone is coupled during use. The memory may be an EEPROM which is a small, inexpensive memory device providing an affordability and simplicity to the microphone hub. The metadata may include Parts Number, Serial Number, support numbers for the one or more microphones, diagnostic information related to the microphone hub (for example, a microphone line being open, shorted, connected, etc.). Advantageously, during use, the computer to which the microphone is coupled can (for example, through a master ANIF within that computer) access essential information to effectively run the equipment within the microphone hub (for example, the one or more ADCs) by accessing the metadata stored on the memory of the microphone hub. This significantly reduces time spent by an external computer/ECU in an RFX (request for anything) phase, thereby improving efficiency.

The microphone hub 100 may include one or more noise filters 112, 114 coupled (for example with a wired connection) between the connector 116 and the power system 108. The noise filter may include a local power filter (LP) 112, a phantom power filter (PP) 114, or a local power filter 112 and a phantom power filter 114. The local power filter is operable to filter out power line noise if the power supply is a dedicated power supply for the microphone hub (as described in figure 4 in more detail). The phantom power filter is operable to filter out power line noise if the power supply is from a second ANIF, separate from the microphone hub (as described in figure 4 in more detail). The LP 112 may be coupled to a local power source (for example a battery) via the connector 116. The PP 114 may be coupled to an external computer, such as ECU described in figures 3 and 4 in more detail.

Advantageously, the microphone hub can effectively filter out different types of power line noise, depending on the type of power supply coupled to the microphone hub. This provides a more versatile microphone hub that can be applied to multiple different types of applications (for example, applications where a local power supply is available, where a local power supply is solely available, where a phantom power supply is available, or where solely a phantom power supply is available) thus increasing the usability of the microphone hub for a variety of OEMs. Moreover, this provides OEMs and customers with more flexibility on the selection of powering the microphone hub 100 and provides multiple useful different examples of power mode.

The microphone hub 100 may include a switch operable to switch the microphone hub on or off. The switch can be a manually actuated switch coupled to a local power (for example, a battery or other local power source) via the connector 116. Alternatively, the switch can be operable to receive a signal (via the connector 116) from an external computer (such as the ECU as described in figures 3 and 4) to actuate an on/off functionality and, thus, switch the microphone hub on or off. The signal may be a trigger signal sent by a master ANIF of the external computer. In an embodiment, the external computer may be coupled to the connector 116 (and the switch) by means of an optocoupler or any other suitable wired connection means. In an embodiment, the switch may include within a printed circuit board of the microphone hub 100. Advantageously, the microphone hub can be switched on and off for power savings.

Figures 3a depicts a microphone hub 100 in communication with a computer 200 (for example, an ECU of a vehicle, an IVI of a vehicle, a computer of a smart home, or similar) and illustrates the microphone hub 100 as an intermediary plug and play device between the main computer 200 and the plurality of microphones. In the figure 3a, up to eight microphones are coupled to the input 102 (and the two ADCs 106) of the microphone hub, and the ANIF of the microphone hub 100 is coupled to a master ANIF of the computer 200 via the ANIF UpSide of the microphone hub 100. During operation of the system depicted in figure 3a, the microphone hub 100 is first powered up. Power may be provided in the form of phantom power (PP) by the master ANIF of the computer 200 or via a local power (LP) set-up, such as a battery or ACC connection. The power may pass through the phantom power filter, or the local power filter as described above and below in figure 4 to filter out power line noise. The master ANIF of the computer 200 may discover the microphone hub 100 by reading the metadata stored on the memory 110. As described above, the metadata stored on the memory 110 may include one or more parts numbers for each of the components within the microphone hub 100, one or more serial numbers for each of the components within the microphone hub 100, etc.). The metadata of the one or more microphones coupled to the microphone hub may also be stored on the memory 110 and may include diagnostic information on for example, whether a connected microphone is supported by the microphone hub 100, whether a connected microphone is functioning or malfunctioning (for example, due to a short circuit), diagnostic data of one or more components within the microphone hub, or any combination of the above.

Accordingly, the master ANIF of the computer 200 may discover the types of microphone(s) coupled to the microphone hub 100 and, accordingly, send configuration data to the ANIF of the microphone hub 100. The configuration data may include data to configure the ANIF of the microphone hub 100 (the slave ANIF) and data to configure the registers of the one or more ADCs 106 of microphone hub 100 to ensure efficient analog to digital conversion. Data to configure the ANIF of the microphone hub 100 may include data to include the microphone hub 100 as a node, settings (for example, software) to provide an audio transfer connection between the one or more ADCs 106 and the ANIF 104 of the microphone hub 100, settings (for example, software) to provide a control path between each of the plurality of components within the microphone hub 100 (for example, between the ANIF 104, the one or more ADCs 106, the memory 110, the LP filter 112 or PP filter 114, or any combination thereof). The data to configure the registers of the one or more ADCs 106 may include one or more ADC modes, one or more audio data formats (e.g., WAV, MP3, AAC, or any other suitable audio data format), or any other suitable data required by an ADC. The master ANIF of the computer 200 may run one or more diagnostic programs to determine the functionality of the microphone hub 100 and/or the one or more microphones coupled to the microphone hub 100. Accordingly, the master ANIF of the computer 200 acts as the main ANIF for the system, and the ANIF of the microphone hub 100 (the slave ANIF) acts as an intermediary between the one or more microphones and the master ANIF of the computer 200.

In a preferred embodiment, a plurality of microphone hubs (such as microphone hub 100 described in figures 1 and 2 above) may be coupled to one another as a microphone hub system in which a large number of microphones can be supported for the purposes of the computer 200. Figure 3b depicts a system including a first microphone hub 100a and a second microphone hub 100b (each of which corresponding to the microphone hub described in figures 1 and 2 above). That system provides an arrangement in which 9 or more microphones may be coupled to the computer 200 via two microphone hubs 100a and 100b. In an embodiment, the second microphone hub 100b may include one ADC 106 operable to receive analog audio signals from up to four microphones. In an embodiment, the second microphone hub 100b may include two ADCs 106, each ADC operable to receive analog audio signals from up to four microphones. Accordingly, the second microphone hub 100b may be configured to receive analog audio signals from up to four microphones or up to 8 microphones. This may be adjusted depending on an OEM's and/or customer's requirements.

The second microphone hub 100b may be coupled directly to the first microphone hub 100a, and the first microphone hub 100a may be coupled to the master ANIF of the computer 200. The ANIF of the first microphone hub 100a and the ANIF of the second microphone hub 100b may each correspond to a slave ANIF. In particular, the ANIF of the second microphone hub 100b may be coupled via its ANIF UpSide to the ANIF DownSide of the first microphone hub 100a. The ANIF UpSide of the first microphone hub 100a may be coupled to the master ANIF of the computer 200 as with the arrangement in figure 3 a. Although only two microphone hubs 100a and 100b are depicted in figure 3b, the invention is not limited to two microphone hubs and may include any number n of microphone hubs. Each of the plurality of microphone hubs (for example, the two microphone hubs 100a and 100b and optionally any additional microphone hubs) may be coupled to the master ANIF of the computer 200 in daisy chain connection, a star connection, a ring type connection, any type of BUS connection, any type of digital BUS connection, any suitable automotive BUS connection, or any combination of the above-mentioned connections. The one or more connections transfer audio data (for example, the one or more digital audio signals) and/or control data (for example, data/metadata stored on the memory of any one of the microphone hubs, configuration data from the master ANIF of the computer 200, or any other type of control data).

In a preferred embodiment, a system is provided. The system includes a plurality of microphone hubs (for example, 100a, 100b and optionally up to 100n), each of the plurality of microphone hubs corresponding to any one of microphone hub 100, the first microphone hub 100a, or the second microphone hub 100b as defined in figure. The ANIF of each of the plurality of microphone hubs correspond to a slave ANIF and each of the plurality of microphone hubs are coupled to the computer 200 via a master ANIF of the computer 200. The system can be coupled to the computer 200, for example by attaching a data and/or power transfer cable to the connector 116 of the microphone hub 100 to the ANIF of the computer 200.

Advantageously, multiple microphone hubs can be coupled together to accommodate any number of microphones. For example, a single microphone hub may be effective with up to eight microphone inputs (each coupled to one or more ADCs within the microphone hub). By providing a system with multiple microphone hubs, a large number (e.g. more than 8) of microphones can simply be connected to a single computer without large re-wiring requirements. Similarly, an arrangement can easily be upgrade to include a larger number of microphones by simply plugging in one or more additional microphone hubs. Different microphone hubs may be effective with more than eight microphone inputs or less than eight microphone inputs. In such arrangements the number of microphones in a system may still be limited by the number of microphone inputs present in a hub. By providing a system with multiple microphone hubs, any number of microphone inputs can be catered for.

In an embodiment, each of the plurality of microphone hubs may be coupled to the master ANIF of the computer 200 in a daisy chain connection. Advantageously, the plurality of microphone hubs are compatible with A2B connections (for example, including A2B 1.0, 2.0 and future iterations of A2B) operable to support multiple channel audio with no jitter and extremely low, fixed latency.

In an embodiment, each of the plurality of microphone hubs may be coupled to the master ANIF of the computer 200 in a star connection. Advantageously, the plurality of microphone hubs are compatible with Audio Video Bridging (AVB) connections, and/or Ethernet connections.

In an embodiment, each of the plurality of microphone hubs may be coupled to the master ANIF of the computer 200 in a ring type connection. Advantageously, the plurality of microphone hubs are compatible with Multichannel Audio Digital Interface (MADI), eMOST, and/or INICnet type connections.

Accordingly a flexible system of microphone hubs is provided for a large variety of applications.

Figures 4a, 4b and 4c depict different power supplies for the microphone hub of figures 1 or 2. Although not shown, the different power supplies depicted in figures 4a, 4b and 4c may be applied to the system of microphone hubs as described above in figure 3b. As discussed above in figures 3a and 3b, one or more microphone hubs 100, 100a, 100b, 100n are coupled to a master ANIF of a computer (such as an ECU, IVI, etc.). The one or more microphone hubs 100, 100a, 100b, 100n may be powered by local power of by passive power. Local power may include a separate and dedicated power source for the one or more microphone hubs 100, 100a, 100b, 100n. For example, a local power source may be a direct connection to one or more batteries (such as a battery of a vehicle), or one or more ACC outlets. Passive power may also ultimately come from one or more batteries or one or more ACC outlets. However, the passive power does not include a direct connection from the one or more batteries or the one or more ACC outlets to the one or more microphone hubs 100, 100a, 100b, 100n. Instead, passive power is provided by the master ANIF of the computer 200. Accordingly, the computer 200 (and thus, the master ANIF of the computer 200) may receive local power and the master ANIF of the computer 200 may direct some of this power to the one or more microphone hubs 100, 100a, 100b, 100n. The master ANIF of the computer 200 may, depending on data read from the memory 110 of the one or more microphone hubs 100, 100a, 100b, 100n, determine how much passive power should be supplied to the one or more microphone hubs 100, 100a, 100b, 100n.

Figure 4a depicts a phantom power set-up in which a microphone hub 100 is coupled to a computer 200, and the master ANIF of the computer 200 first receives a power supply and then passes a phantom power supply to the microphone hub 100. The phantom power supply will first pass through the phantom filter, as described above in figures 1 and 2.

Figure 4b depicts a local power set-up in which the microphone hub 100 is coupled to the computer 200, and the computer 200 provides a local power supply to the microphone hub 100. In this example, the computer 200 may include a separate battery or a dedicated power supply to power the microphone hub 100. The local power supply will first pass through the local filter, as described above in figures 1 and 2. The master ANIF of the computer 200 does not provide power to the power system of the microphone hub 100. The master ANIF of the computer 200 may be operable to control the amount of power provided to the microphone hub 100 depending on the metadata stored on the memory 110 of the microphone hub 100.

Figure 4c depicts an alternative local power set-up in which the microphone hub 100 is coupled to the ANIF of the computer 200a for data transfer (as described in figures 3a and 3b above), and is also coupled to a separate computer 200b dedicated to providing a local power supply to the microphone hub 100. In an example, the local power supply may be within the separate computer 200b, wherein the computer 200b is operable to control the amount of power provided to the microphone hub 100 depending on the metadata stored on the memory 110 of the microphone hub 100. Alternatively, the local power supply may be a direct electrical connection to one or more batteries and/or one or more ACC outlets without the computer 200b. The local power supply will first pass through the local filter, as described above in figures 1 and 2.

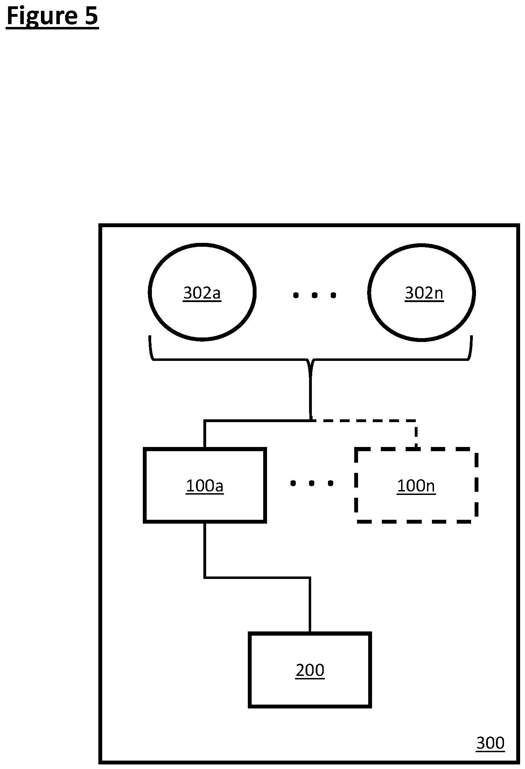

Figure 5 depicts a vehicle 300 including the one or more microphone hubs 100, 100a, 100b, 100n as described in figures 1 to 4 above, coupled to a master ANIF of a computer 200 as described in figures 3 and 4 above. Vehicle 300 includes a plurality of microphones 302a to 302n which may be coupled to one or more of the one or more microphone hubs 100, 100a, 100b, 100n. The computer 200 may include a processor, memory and the master ANIF coupled to the processor. The plurality of microphones 302a to 302n may be any suitable type of microphone that can record sound and can be electrically coupled to one or more microphone hubs 100a, 100b, 100n.

Advantageously, a vehicle is provided with flexible and dedicated microphone hub is provided that can receive an audio input signal from as little as one microphone up to a plurality of microphones. By providing a microphone hub with all the essential features to couple to one or more microphones, to convert the analog audio signal to a digital audio signal, and to send the digital audio signal to the device's own ANIF before (for example) sending the digital audio signal to an external computer (such as an ECU of a vehicle), a simple device is provided that can be flexibly applied in a plurality of different environments (for example, environments were different numbers of microphones are required). This provides a large cost saving to original equipment manufacturers (OEMs) that currently create bespoke wiring and electrical arrangements depending on the specific requirements of a vehicle. The above-mentioned microphone hub can be used in any vehicle (or smart home arrangement) that has a computer (such as an ECU) and one or more microphones and can operate as a simple "plug and play" type device.

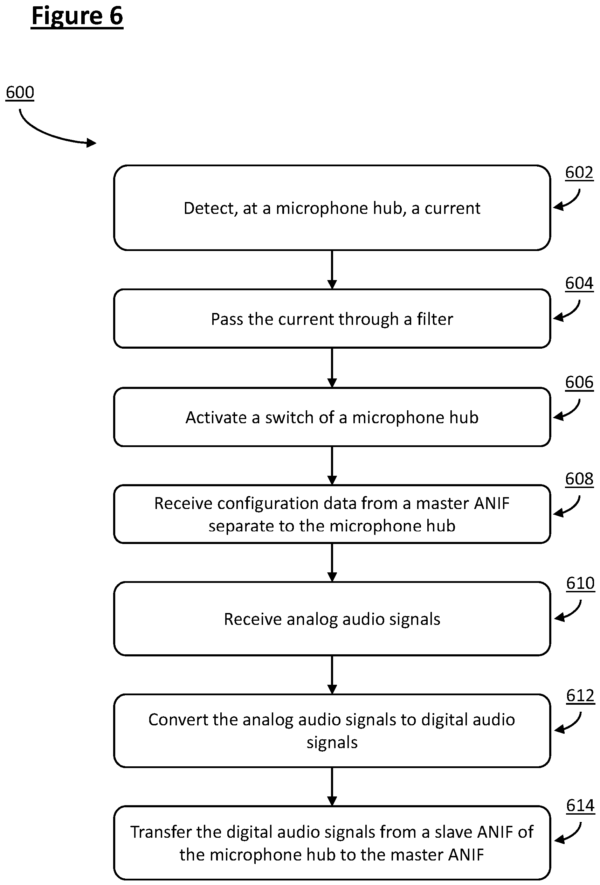

Figure 6 shows a flow chart of a method 400 of operating one or microphone hubs (for example microphone hubs 100, 100a, 100n as described in figures 1 to 5 above). The one or more microphone hubs are coupled to a master ANIF of a computer (for example computer 200 and master ANIF as described in figures 2 to 5 above) and the ANIF of the one or more microphone hubs are slave ANIFs. At 602, the method includes detecting, at the connector of the microphone hub, a current. At 604, the method includes passing the current through the filter. At 606, the method includes activating the switch coupled to the connector and to the power system of the microphone hub. At 608, the method includes receiving configuration data from the master ANIF and configuring the at least one ADC based on the configuration data. At 610, the method includes receiving one or more analog audio signals from one or more microphones (for example, microphones 302a, 302n as described in figure 5 above) coupled to the input. At 612, the method includes converting, by the ADC, each of the one or more analog audio signals to one or more digital audio signals. At 614, the method includes transferring the one or more digital audio signals from the slave ANIF to the master ANIF.

Advantageously, a microphone hub is provided that can receive an audio input signal from as little as one microphone up to a plurality of microphones. By providing a microphone hub with all the essential features to couple to one or more microphones, to convert the analog audio signal to a digital audio signal, and to send the digital audio signal to the device's own ANIF before (for example) sending the digital audio signal to an external computer (such as an ECU of a vehicle), a simple device is provided that can be flexibly applied in a plurality of different environments (for example, environments were different numbers of microphones are required). This provides a large cost saving to original equipment manufacturers (OEMs) that currently create bespoke wiring and electrical arrangements depending on the specific requirements of a vehicle. The above-mentioned microphone hub can be used in any vehicle (or smart home arrangement) that has a computer (such as an ECU) and one or more microphones and can operate as a simple "plug and play" type device. During use, the computer to which the microphone is coupled can (for example, through a master ANIF within that computer) may access essential information of the microphone hub (for example, stored on a memory of the microphone hub) to effectively run the equipment within the microphone hub (for example, the one or more ADCs) by accessing the metadata stored on the memory of the microphone hub. This significantly reduces time spent by an external computer/ECU in an RFX (request for anything) phase, thereby improving efficiency.

In an embodiment, the one or more microphone hubs comprise a plurality of microphone hubs, each of the plurality of microphone hubs corresponding to the microphone hub of claims as described above. The ANIF of each of the plurality of microphone hubs correspond to a slave ANIF and each of the plurality of microphone hubs are coupled to the computer via the master ANIF of the computer. Each of the plurality of microphone hubs is coupled to the master ANIF in a daisy chain connection, a star connection, or a ring type connection.

Advantageously, multiple microphone hubs can be coupled together to accommodate any number of microphones. A single microphone hub may be effective with up to eight microphone inputs (each coupled to one or more ADCs within the microphone hub). By providing a system with multiple microphone hubs, a large number (e.g. more than 8) of microphones can simply be connected to a single computer without large re-wiring requirements. Similarly, an arrangement can easily be upgrade to include a larger number of microphones by simply plugging in one or more additional microphone hubs. The plurality of microphone hubs are compatible with a plurality of connection types. For example, in a daisy connection, the plurality of microphone hubs are compatible with A2B connections (for example, including A2B 1.0, 2.0 and future iterations of A2B) operable to support multiple channel audio with no jitter and extremely low, fixed latency. In a star connection, the plurality of microphone hubs are compatible with Audio Video Bridging (AVB) connections, and/or Ethernet connections. In a ring type connection, the plurality of microphone hubs are compatible with Multichannel Audio Digital Interface (MADI), eMOST, and/or INICnet type connections.

## Claims

1. A microphone hub comprising:
an input operable to receive one or more analog audio signals from one or more microphones;
an audio network interface, ANIF;
at least one analogue to digital converter (ADC) coupled to the input and to the ANIF, the ADC operable to convert each of the one or more analog audio signals to one or more digital audio signals, the ADC further operable to send the one or more digital audio signals to the ANIF; and
a power system operable to provide power to the microphone hub.

2. The microphone hub of claim 1, further comprising:
memory coupled to the ANIF.

3. The microphone hub of claim 2, wherein the memory is operable to store:
metadata of the components within the microphone hub;
metadata of the one or more microphones coupled to the microphone hub;
diagnostic data of one or more components within the microphone hub; or
any combination of the above

4. The microphone hub of claims 2 or 3, wherein the memory is electrically erasable programmable read-only memory, EEPROM.

5. The microphone hub of any one of claims 1 to 4, further comprising:
a connector coupled to the power system, the connector operable to receive power from a power supply and to provide the power to the power system.

6. The microphone hub of claim 5, further comprising a noise filter coupled between the connector and the power system

7. The microphone hub of claim 6, the noise filter comprising a local power filter,
a phantom power filter, or a local power filter and a phantom power filter, wherein:
the local power filter is operable to filter out power line noise if the power supply is a dedicated power supply for the microphone hub; and
the phantom power filter is operable to filter out power line noise if the power supply is from a second ANIF, separate from the microphone hub.

8. The microphone hub of any one of claims 1 to 7, further comprising:
a switch operable to switch the microphone hub on or off.

9. A system comprising:
a plurality of microphone hubs, each of the plurality of microphone hubs corresponding to the microphone hub of claims 1 to 8, wherein the ANIF of each of the plurality of microphone hubs correspond to a slave ANIF and wherein each of the plurality of microphone hubs are coupled to a computer via a master ANIF of the computer.

10. The system of claim 9, wherein each of the plurality of microphone hubs is coupled to the master ANIF in a daisy chain connection.

11. The system of claim 9, wherein each of the plurality of microphone hubs is coupled to the master ANIF in a star connection.

12. The system of claim 9, wherein each of the plurality of microphone hubs is coupled to the master ANIF in a ring type connection .

13. A vehicle comprising:
a plurality of microphones;
a computer comprising a processor;
a master ANIF coupled to the processor; and
the microphone hub of claims 1 to 7 or the system of claims 8 to 12.

14. A method of operating one or more microphone hubs as defined by any one of claims 1 to 8, wherein the microphone hub is coupled to a master ANIF of a computer that is separate to the microphone hub, and wherein the ANIF of the microphone hub is a slave ANIF, the method comprising:
detecting, at the connector of the microphone hub, a current;
passing the current through the filter;
activating the switch coupled to the connector and to the power system of the microphone hub;
receiving configuration data from the master ANIF;
configuring the at least one ADC based on the configuration data;
receiving one or more analog audio signals from one or more microphones coupled to the input;
converting, by the ADC, each of the one or more analog audio signals to one or more digital audio signals; and
transferring the one or more digital audio signals from the slave ANIF to the master ANIF.

15. The method of claim 14, wherein the one or more microphone hubs comprise a plurality of microphone hubs, each of the plurality of microphone hubs corresponding to the microphone hub of claims 1 to 8, wherein the ANIF of each of the plurality of microphone hubs correspond to a slave ANIF and wherein each of the plurality of microphone hubs are coupled to the computer via the master ANIF of the computer, wherein each of the plurality of microphone hubs is coupled to the master ANIF in:
a daisy chain connection;
a star connection; or
a ring type connection.
